# EUROPÄISCHE PATENTSCHRIFT

(11) **EP 3 790 702 B1**
(45) Veröffentlichungstag und Bekanntmachung des Hinweises auf die Patenterteilung: **27.12.2023**
(21) Anmeldenummer: 19722868.7
(22) Anmeldetag: 07.05.2019
(51) Int. Cl.: B23Q 1/66, B23Q 7/02

(54) **KUGELBAHN-FRÄSMASCHINE MIT DREHHALTER MIT WENIGSTENS ZWEI DREHPOSITIONIER-VORRICHTUNGEN**
BALL TRACK MILLING MACHINE HAVING A ROTARY HOLDER WITH AT LEAST TWO ROTATIONAL POSITIONING DEVICES
FRAISEUSE DE CHEMINS DE ROULEMENT À SUPPORT ROTATIF COMPORTANT AU MOINS DEUX DISPOSITIFS DE POSITIONNEMENT DE LA ROTATION

(30) Priorität: 09.05.2018 DE 102018207258
(43) Veröffentlichungstag der Anmeldung: 17.03.2021
(73) Patentinhaber: FELSOMAT GmbH & Co. KG, 75203 Königsbach-Stein (DE)
(72) Erfinder: PESCHINA, Jürgen, 75438 Knittlingen (DE); THIJSSEN, Johan, 3740 Bilzen (BE)
(74) Vertreter: Kohler Schmid Möbus Patentanwälte
(86) Internationale Anmeldenummer: PCT/EP2019/061612
(87) Internationale Veröffentlichungsnummer: WO 2019/215116

(56) Entgegenhaltungen:
- EP-A2- 3 205 446
- DE-A1-102016 004 178
- DE-B3- 10 334 677
- DE-B3-102006 019 325

## Beschreibung

### Hintergrund der Erfindung

Die Erfindung betrifft eine Kugelbahn-Fräsmaschine zum Fertigen von Kugelbahnen in Werkstücken für homokinetische Gelenke, umfassend
- eine um eine Werkzeugspindelachse drehbare Werkzeugspindel, und
- ein Kugelbahn-Fräswerkzeug, das auf der Werkzeugspindel gehalten ist.

Eine solche Kugelbahn-Fräsmaschine ist bekannt geworden aus der Firmendruckschrift "Einladung zum EMAG Technologieforum 2017", EMAG Salach GmbH, DE, 16.-17.05.2017, Seite 12.

Homokinetische Gelenke, auch genannt Gleichlaufgelenke, werden dazu eingesetzt, um ein Drehmoment von einer ersten Welle auf eine winkelig dazu angeordnete zweite Welle zu übertragen. Homokinetische Gelenke werden insbesondere als Antriebswellen im Automobilbau eingesetzt, etwa wenn angetriebene Räder einzeln gefedert gelagert werden sollen.

Kugelbahnen für homokinetische Gelenke werden typischerweise mittels eines Fräsers hergestellt, mit dem die zu fertigende Kugelbahn am Werkstück abgefahren wird. Der Fräser wird dabei typischerweise unter einem Winkel gegenüber der Achse des Werkstücks geneigt geführt.

Aus der Firmendruckschrift der EMAG Salach GmbH, ebenda, ist eine Kugelbahn-Fräsmaschine bekannt geworden, bei der das zu bearbeitende Werkstück in einer vertikalen, nach unten gerichteten Werkstückspindel gehalten und verfahren wird, und nach dem Pick-up Prinzip von einer Übergabezone zu einem Fräswerkzeug verbracht und dort bearbeitet werden kann. Das Fräswerkzeug ist in einer Werkzeugspindel gehalten, die in einer verschwenkbaren Wiege angeordnet ist. In der gezeigten Ausführungsform sind in der Wiege zwei Werkzeugspindeln mit Bearbeitungswerkzeugen vorgesehen, wodurch eine Kombinationsbearbeitung in einer Aufspannung ermöglicht wird.

Ein ähnliches Maschinenkonzept ist auch aus der Firmendruckschrift "DMG MORI Vertikales Produktionsdrehen CTV-Baureihe", datiert 09/2017, Seite 20, bekannt geworden.

Nachteilig an diesen bekannten Fräsmaschinen ist eine vergleichsweise lange Span-zu-Span-Zeit bei der Bearbeitung von mehreren Werkstücken hintereinander.

Aus der DE 10 2006 019 325 B3 ist eine Werkzeugmaschine zur Verzahnungsbearbeitung von Werkstücken bekannt geworden, bei der zwei Werkstückspindeln auf einem Drehhalter angeordnet sind. Durch Drehen des Drehhalters wechseln die Werkstückspindeln jeweils zwischen einer Bearbeitungsposition, an der mit einem Wälzfräser die Verzahnungsbearbeitung eines Werkstücks stattfinden kann, und einer Transferposition, an der ein Werkstückwechsel stattfinden kann.

### Aufgabe der Erfindung

Es ist Aufgabe der Erfindung, eine Kugelbahn-Fräsmaschine vorzustellen, mit der eine kürzere Span-zu-Span-Zeit bei der Kugelbahn-Fräsbearbeitung von mehreren Werkstücken hintereinander erreicht werden kann.

### Beschreibung der Erfindung

Diese Aufgabe wird erfindungsgemäß gelöst durch eine Kugelbahn-Fräsmaschine der eingangs genannten Art, die dadurch gekennzeichnet ist,
dass die Kugelbahn-Fräsmaschine einen Drehhalter aufweist, auf welchem wenigstens zwei Drehpositionier-Vorrichtungen angeordnet sind,
wobei jede Drehpositionier-Vorrichtung einen Werkstückhalter aufweist,
dass der Drehhalter verschwenkbar um eine Drehhalter-Achse ausgebildet ist, so dass jeder der Werkstückhalter zumindest zwischen einer Bearbeitungsposition und einer Transferposition verschwenkbar ist, wobei ein auf einem Werkstückhalter angeordnetes Werkstück mittels des Kugelbahn-Fräswerkzeugs bearbeitbar ist, wenn der Werkstückhalter in der Bearbeitungsposition ist,
und dass mit einer jeweiligen Drehpositionier-Vorrichtung eine Drehstellung des Werkstückhalters um eine Positionier-Achse gegenüber dem Drehhalter veränderlich einstellbar ist, wobei die Drehstellung des Werkstückhalters gegenüber dem Drehhalter an der Bearbeitungsposition für eine Bearbeitung mit dem Kugelbahn-Fräswerkzeug arretierbar ist.

Im Rahmen der Erfindung ist es vorgesehen, auf einem Drehhalter wenigstens zwei Drehpositionier-Vorrichtungen jeweils mit einem Werkstückhalter vorzusehen, mit dem ein zu bearbeitendes Werkstück gehalten und in eine für eine gewünschte Bearbeitung geeignete Drehstellung verbracht und in dieser Drehstellung arretiert werden kann.

Durch Drehen des Drehhalters kann ein Werkstück auf einer ersten Drehpositionier-Vorrichtung an die Bearbeitungsposition verbracht werden, um dort einer Fräsbearbeitung mit dem Kugelbahn-Fräswerkzeug zur Fertigung einer oder mehrerer Kugelbahnen unterzogen zu werden; mit der Drehpositionier-Vorrichtung kann dabei eine gewünschte Drehstellung des Werkstücks zum Kugelbahn-Fräswerkzeug eingestellt und fixiert werden. Zeitgleich kann ein Werkstück auf einer zweiten Drehpositionier-Vorrichtung nach einer abgeschlossenen Bearbeitung an die Transferposition verbracht werden und dort ausgetauscht werden. Der Werkstückwechsel an der Transferposition kann also hauptzeitparallel während der Kugelbahn-Fräsbearbeitung des Werkstücks an der Bearbeitungsposition durchgeführt werden. Dadurch kann eine hohe Auslastung des Kugelbahn-Fräswerkzeugs erreicht werden, insbesondere mit einer sehr kurzen Span-zu-Span-Zeit (die im Wesentlichen nur durch die kurze Zeit für das Drehen des Drehhalters bestimmt wird). Die Fertigung von Kugelbahnen in den Werkstücken kann insgesamt sehr schnell und effizient erfolgen.

Das Kugelbahn-Fräswerkzeug ist typischerweise als ein Fingerfräser ausgebildet; bevorzugt ist die Werkzeugspindel verschwenkbar gelagert, um einen geeigneten Fräsanstellwinkel (der in der Regel durch die Bauform des Fräskopfs vorgegeben wird) für das verwendete Kugelbahn-Fräswerkzeug bzw. die gewünschte Kugelbahnform flexibel einstellen zu können.

Eine Drehpositionier-Vorrichtung umfasst typischerweise einen Elektromotor, mit dem die Drehstellung automatisiert verändert werden kann (etwa um zwischen verschiedenen Kugelbahnen am Werkstück wechseln zu können), und eine Arretiereinrichtung, mit der eine angefahrene Drehstellung während der Kugelbahn-Fräsbearbeitung präzise gehalten werden kann. Die Arretiereinrichtung kann mechanisch sein, etwa eine Klemm- oder Riegeleinrichtung, oder auch elektromagnetisch sein, etwa integriert in einen Torque-Motor. Die Arretierung der Drehstellung eines Werkstückhalters an einer Drehpositionier-Vorrichtung erfolgt bevorzugt mit einem Haltemoment von wenigstens 100 Nm, besonders bevorzugt mit wenigstens 300 Nm, und/oder mit einer vollständigen mechanischen Blockade des Drehhalters. Ein besonderes Haltemoment während der Drehung der Drehpositionier-Vorrichtung bzw. der Werkstück-Halterung ist in der Regel nicht eingerichtet, und für die Kugelbahn-Fräsbearbeitung auch nicht nötig, da diese bei nicht-drehendem (und meist insgesamt stillstehendem) Werkstück erfolgt.

Im Rahmen der Erfindung werden die Werkstücke für die Kugelbahn-Fräsbearbeitung doppelt positioniert: Zum einen durch den Drehhalter, der die Anordnung (Verteilung) der verschiedenen Drehpositionier-Vorrichtungen an der Bearbeitungsposition und der Transferposition und ggf. weiteren Positionen/Stationen vorgibt, und zum anderen im Drehhalter durch die Drehpositionier-Vorrichtungen, mit denen jeweils eine lokale Orientierung des Werkstücks bezüglich der lokalen Einrichtungen an der Position/Station einstellbar ist. Dadurch kann insbesondere an der Bearbeitungsposition eine gewünschte Drehstellung eines Werkstücks bei der Kugelbahn-Fräsbearbeitung vorgegeben und über die Dauer der Kugelbahn-Fräsbearbeitung auch verändert werden (etwa um nacheinander mehrere Kugelbahnen am Werkstück zu fertigen), ohne die Anordnung einer anderen Drehpositionier-Vorrichtung an einer anderen Position (etwa an der Transferposition) zu beeinträchtigen oder die dortigen Vorgänge zu stören. Dadurch ist eine optimale, zeitsparende Handhabung der Werkstücke im Rahmen der Erfindung möglich.

### Bevorzugte Ausführungsformen der Erfindung

Bei einer bevorzugten Ausführungsform der erfindungsgemäßen Kugelbahn-Fräsmaschine ist die Werkzeugspindel in einer Werkzeugspindel-Halterung gelagert, die um eine Verschwenkachse drehbar ist, die nicht-parallel zur Werkzeugspindelachse verläuft,
insbesondere wobei die Verschwenkachse senkrecht zur Werkzeugspindelachse verläuft. Mittels der verschwenkbaren Werkzeugspindel-Halterung kann ein Fräser-Anstellwinkel passend für den verwendeten Fräskopf flexibel eingestellt werden.

Bevorzugt ist eine Weiterbildung dieser Ausführungsform, bei der vorgesehen ist, dass auf der Werkzeugspindel zwei Kugelbahn-Fräswerkzeuge an axial einander gegenüberliegenden Seiten der Werkzeugspindel gehalten sind, so dass beide Kugelbahn-Fräswerkzeuge gleichzeitig mittels der Werkzeugspindel um die Werkzeugspindelachse drehbar sind, und dass ein Werkstück auf einem Werkstückhalter in Bearbeitungsposition durch Verschwenken der Werkzeugspindel-Halterung um die Verschwenkachse alternativ mit den beiden Kugelbahn-Fräswerkzeugen bearbeitbar ist. Mit dieser Bauform können auf einfache Weise zwei unterschiedliche Fräsköpfe in rascher Folge am Werkstück eingesetzt werden, insbesondere bei einer Weichbearbeitung des Werkstücks. Die Fräsköpfe weisen in der Regel unterschiedliche Durchmesser auf. Mit dem Fräskopf des kleineren Durchmessers wird typischerweise zunächst der Hauptteil einer Kugelbahn gefräst, und mit dem Fräskopf des größeren Durchmessers (der weniger weit in das Werkstückmaterial eindringt) wird an den Kanten der Kugelbahn eine Fase erzeugt. Man beachte, dass in dieser Bauform die Verschwenkachse die Werkzeugspindelachse typischerweise zwischen den Fräsköpfen schneidet.

In einer weiteren, vorteilhaften Weiterbildung sind die Werkzeugspindel, die Werkzeugspindel-Halterung und das Kugelbahn-Fräswerkzeug so ausgebildet, dass die Verschwenkachse und die Werkzeugspindelachse ein Zentrum eines Bearbeitungskopfs des Kugelbahn-Fräswerkzeugs schneiden. Dadurch ist ein besonders stabiler Aufbau und eine besonders exakte Fräsbearbeitung einer Kugelbahn möglich, insbesondere im Rahmen einer Hartbearbeitung. Bei dieser Bauform ist typischerweise nur ein Bearbeitungswerkzeug (Fräskopf) an der Werkzeugspindel angeordnet. Man beachte, dass eine Kugelbahn-Fräsmaschine zwischen den beiden vorgenannten Bauformen umgerüstet werden kann, falls gewünscht, etwa um auf derselben Kugelbahn-Fräsmaschine nacheinander die Weichbearbeitung und die Hartbearbeitung durchzuführen.

Bevorzugt ist weiterhin eine Ausführungsform, bei der die Verschwenkachse horizontal verläuft, insbesondere wobei die Verschwenkachse senkrecht zur Drehhalter-Achse verläuft. Dies hat sich in der Praxis bewährt, und ermöglicht (insbesondere zusammen mit einer horizontalen Drehhalter-Achse und horizontalen Positionier-Achsen) einen günstigen Spänefall und einen einfachen Zugang zu den Werkstücken.

Besonders bevorzugt ist eine Ausführungsform, bei der an jeder Drehpositionier-Vorrichtung eine Klemm- oder Riegelvorrichtung vorgesehen ist, mit der eine Drehstellung des Werkstückhalters der Drehpositionier-Vorrichtung gegenüber dem Drehhalter mechanisch arretierbar ist. Dadurch ist eine zuverlässige Einhaltung einer gewünschten Drehstellung eines jeweiligen Werkstückhalters auf einfache Weise möglich; die Klemm- oder Riegelvorrichtung kann auch bei hohen Bearbeitungskräften gut eingesetzt werden.

Bei einer vorteilhaften Ausführungsform ist an jeder Drehpositionier-Vorrichtung ein Torque-Motor ausgebildet, mit dem eine Drehstellung des Werkstückhalters der Drehpositionier-Vorrichtung gegenüber dem Drehhalter einstellbar ist, und mit dem die Drehstellung des Werkstückhalters gegenüber dem Drehhalter elektromagnetisch arretierbar ist. Mittels des Torquemotors kann eine gewünschte Drehstellung schnell aufgesucht und für eine Bearbeitung des Werkstücks auf dem Werkstückhalter sehr schnell fixiert und danach wieder gelöst werden.

Besonders vorteilhaft ist eine Ausführungsform, bei der die Kugelbahn-Fräsmaschine weiterhin eine Werkstück-Wechselvorrichtung umfasst, wobei an einem Werkstückhalter ein Werkstück mittels der Werkstück-Wechselvorrichtung ausgetauscht werden kann, wenn der Werkstückhalter in der Transferposition ist. Die Werkstück-Wechselvorrichtung kann beispielsweise ein Portalsystem mit einem Greifer für die Werkstücke umfassen. An der Transferposition kann das Werkstück auf dem dortigen Werkstückhalter hauptzeitparallel ausgetauscht werden.

Weiterhin vorteilhaft ist eine Ausführungsform einer erfindungsgemäßen Kugelbahn-Fräsmaschine, die vorsieht, dass die Kugelbahn-Fräsmaschine weiterhin eine Bürstentgrat-Vorrichtung umfasst, wobei ein Werkstück auf einem Werkstückhalter mittels der Bürstentgrat-Vorrichtung gebürstet werden kann, wenn der Werkstückhalter mittels des Drehhalters in die Transferposition oder eine Entgratposition verschwenkt ist. Durch das Bürsten mit der Bürstentgrat-Vorrichtung ist eine Entfernung von Graten, die nach der Fräsbearbeitung bei der Fertigung der Kugelbahnen am Werkstück verblieben sind, einfach und schnell möglich, ohne eine zusätzliche Aufspannung vornehmen zu müssen. Falls während eines Fräsbearbeitungszyklus an einem der Werkstückhalter am anderen Werkstückhalter zeitlich und räumlich sowohl ein Bürstentgraten als auch ein Werkstückwechsel möglich ist, kann die Bürstentgrat-Vorrichtung an der Transferposition auf das Werkstück zugreifen, und eine eigene Entgratposition ist nicht nötig. Anderenfalls kann auch eine (von der Transferposition und der Bearbeitungsposition) separate Entgratposition eingerichtet werden, wobei dann auch eine weitere Drehpositionier-Vorrichtung mit Werkstückhalter am Drehhalter vorgesehen ist, so dass Werkstückwechsel und Entgraten zueinander parallel und auch hauptzeitparallel zur Fräsbearbeitung erfolgen können.

Bevorzugt ist weiterhin eine Ausführungsform, bei der die Kugelbahn-Fräsmaschine weiterhin eine Laserhärtungs-Vorrichtung umfasst, wobei ein Werkstück auf einem Werkstückhalter mittels der Laserhärtungs-Vorrichtung gehärtet werden kann, wenn der Werkstückhalter mittels des Drehhalters in die Transferposition oder eine Laserhärteposition verschwenkt ist. Durch Laserhärten mit der Laserhärtungs-Vorrichtung kann die Werkstückoberfläche auf einfache Weise vor Ort gehärtet werden, um die Verschleißfestigkeit des Werkstücks zu erhöhen, ohne eine zusätzliche Aufspannung vornehmen zu müssen. Falls während eines Fräsbearbeitungszyklus an einem der Werkstückhalter am anderen Werkstückhalter zeitlich und räumlich sowohl ein Laserhärten als auch ein Werkstückwechsel möglich ist, kann die Laserhärtungs-Vorrichtung an der Transferposition auf das Werkstück zugreifen, und eine eigene Laserhärteposition ist nicht nötig. Anderenfalls kann auch eine (von der Transferposition und der Bearbeitungsposition) separate Laserhärteposition eingerichtet werden, wobei dann auch eine weitere Drehpositionier-Vorrichtung mit Werkstückhalter am Drehhalter vorgesehen ist, so dass Werkstückwechsel und Laserhärten zueinander parallel und auch hauptzeitparallel zur Fräsbearbeitung erfolgen können.

Ebenfalls bevorzugt ist eine Ausführungsform der erfindungsgemäßen Kugelbahn-Fräsmaschine, die vorsieht, dass die Drehpositionier-Vorrichtungen jeweils mit einer Werkstückspindel ausgebildet sind, und dass die Kugelbahn-Fräsmaschine weiterhin eine Drehbearbeitungs-Vorrichtung umfasst, wobei ein Werkstück auf einem Werkstückhalter mittels der Drehbearbeitungs-Vorrichtung drehbearbeitet werden kann, während das Werkstück mit der Werkstückspindel gedreht wird, wenn der Werkstückhalter mittels des Drehhalters in die Transferposition oder eine Drehbearbeitungsposition verschwenkt ist. Mittels der Drehbearbeitungs-Vorrichtung und den Werkstückspindeln kann eine ergänzende Drehbearbeitung der Werkstücke erfolgen, ohne eine zusätzliche Aufspannung vornehmen zu müssen. Falls während eines Fräsbearbeitungszyklus an einem der Werkstückhalter am anderen Werkstückhalter zeitlich und räumlich sowohl eine Drehbearbeitung als auch ein Werkstückwechsel möglich ist, kann die Drehentgrat-Vorrichtung an der Transferposition auf das Werkstück zugreifen, und eine eigene Drehbearbeitungsposition ist nicht nötig. Anderenfalls kann auch eine (von der Transferposition und der Bearbeitungsposition) separate Drehbearbeitungsposition eingerichtet werden, wobei dann auch eine weitere Drehpositionier-Vorrichtung mit Werkstückhalter am Drehhalter vorgesehen ist, so dass Werkstückwechsel und Drehbearbeitung zueinander parallel und auch hauptzeitparallel zur Fräsbearbeitung erfolgen können.

Bevorzugt ist auch eine Ausführungsform, bei der die Drehhalter-Achse horizontal verläuft. Dies hat sich in Hinblick auf Zugänglichkeit der Werkstücke (insbesondere bei ebenfalls horizontalen Positionier-Achsen) und Spänefall bei der Fräsbearbeitung besonders bewährt.

Weiterhin bevorzugt ist eine Ausführungsform, bei der die Positionier-Achsen, um die die Werkstückhalter mit den Drehpositionier-Vorrichtungen verdrehbar sind, parallel zur Drehhalter-Achse verlaufen. Dies ermöglicht einen kompakten Aufbau.

Eine bevorzugte Ausführungsform sieht zudem vor, dass die Werkzeugspindel über ein Kreuzschlitten-System gelagert ist, mit dem die Werkzeugspindel relativ zum Drehalter in drei orthogonale Raumrichtungen x, y, z verfahrbar ist, insbesondere wobei der Drehhalter in einem ortsfesten Drehhalter-Lager drehbar um die Drehhalter-Achse gelagert ist. Mit dem Kreuzschlitten-System kann die Zustellung des Kugelbahn-Fräswerkzeugs zum Werkstück erfolgen, und ebenso eine Anpassung an beliebige Größen von zu bearbeitenden Werkstücken erfolgen. Mit ortsfestem Drehhalter-Lager ist ein besonders einfacher und robuster Aufbau der Kugelbahn-Fräsmaschine möglich.

In den Rahmen der vorliegenden Erfindung fällt auch die Verwendung einer erfindungsgemäßen, oben beschriebenen Kugelbahn-Fräsmaschine, wobei an einem Werkstück auf einem Werkstückhalter in Bearbeitungsposition bei am Drehhalter arretiertem Werkstückhalter eine Kugelbahn für ein homokinetisches Gelenk gefräst wird, und zeitgleich an einem Werkstückhalter in Transferposition ein Werkstückwechsel und/oder eine andere Werkstückbearbeitung an einem dortigen Werkstück stattfindet. Im Rahmen der erfindungsgemäßen Verwendung ist eine besonders hohe Auslastung der Kugelbahn-Fräsmaschine, und insbesondere des Kugelbahn-Fräswerkzeugs, möglich. Der Werkstückwechsel kann hauptzeitparallel zur Fräsbearbeitung erfolgen.

Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung
- Fig. 1: zeigt eine erste Ausführungsform einer erfindungsgemäßen Kugelbahn-Fräsmaschine in einer schematischen Perspektivansicht, mit zwei Kugelbahn-Fräswerkzeugen auf einer Werkzeugspindel;
- Fig. 2: zeigt die Ausführungsform von Fig. 1, in einer schematischen Seitenansicht entlang einer Verschwenkachse der Werkzeugspindel-Halterung;
- Fig. 3: zeigt eine zweite Ausführungsform einer erfindungsgemäßen Kugelbahn-Fräsmaschine in einer schematischen Perspektivansicht, mit einem Kugelbahn-Fräswerkzeug, dessen Fräskopf von einer Verschwenkachse der Werkzeugspindel-Halterung geschnitten wird;
- Fig. 4: zeigt die Ausführungsform von Fig. 3, in einer schematischen Seitenansicht entlang einer Verschwenkachse der Werkzeugspindel-Halterung;
- Fig. 5: zeigt eine schematische Aufsicht auf einen Drehhalter für eine dritte Ausführungsform einer erfindungsgemäßen Kugelbahn-Fräsmaschine.

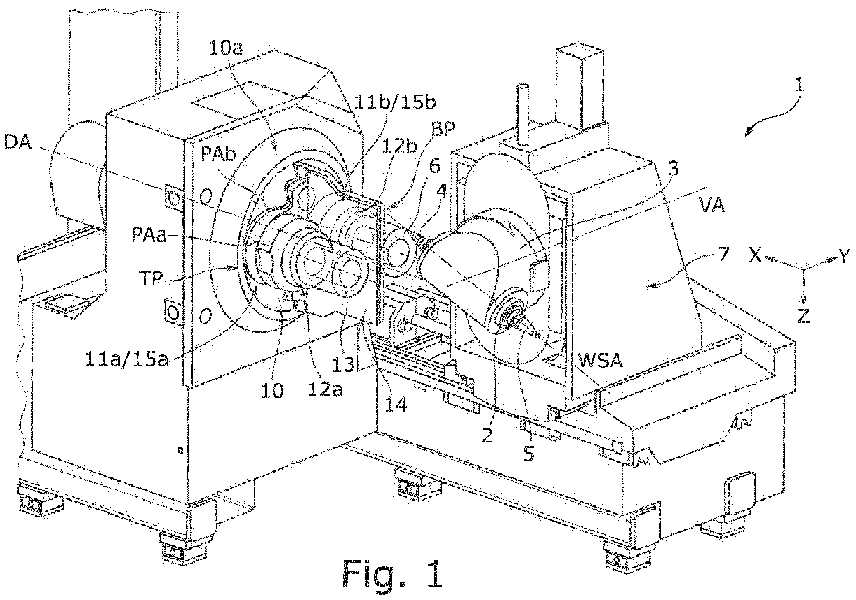

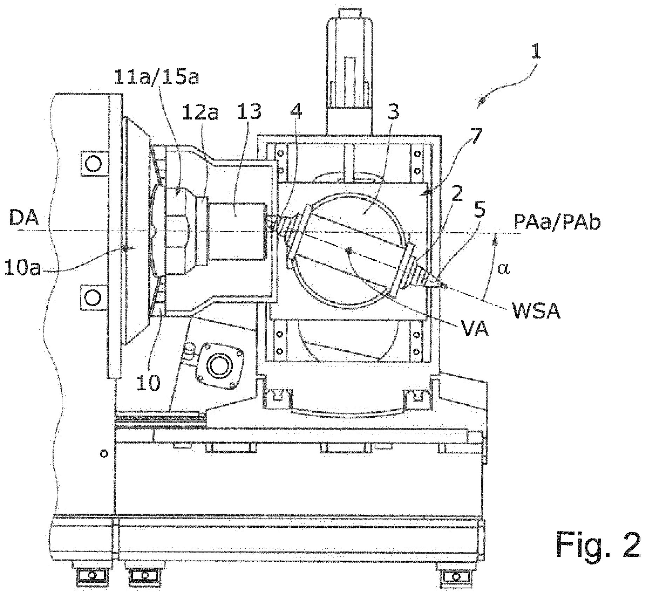

Die **Fig. 1** und **Fig. 2** zeigen eine erste Ausführungsform einer erfindungsgemäßen Kugelbahn-Fräsmaschine 1 zum Fertigen von Kugelbahnen in Werkstücken 6, 13 für homokinetische Gelenke, hier im Rahmen einer Weichbearbeitung.

Die Kugelbahn-Fräsmaschine 1 weist eine Werkzeugspindel 2 auf, die auf einer Werkzeugspindel-Halterung 3 gelagert ist und mittels dieser Werkzeugspindel-Halterung 3 um eine hier horizontale Verschwenkachse VA verschwenkt werden kann. Die Werkzeugspindel 2 ist um eine Werkzeugspindelachse WSA drehbar, wodurch hier ein erstes Kugelbahn-Fräswerkzeug 4 und ein zweites Kugelbahn-Fräswerkzeug 5 gleichzeitig bezüglich dieser Achse WSA angetrieben werden können. Mit dem ersten Kugelbahn-Fräswerkzeug 4 wird gerade eine Kugelbahn an einem im Wesentlichen rohrförmigen, runden Werkstück 6 gefertigt.

Die Werkzeugspindel 2 und damit auch die Kugelbahn-Fräswerkzeuge 4, 5 sind über ein Kreuzschlitten-System 7 in drei orthogonale Richtungen x, y und z verfahrbar, insbesondere für eine Zustellung der Kugelbahn-Fräswerkzeuge 4, 5 zum Werkstück 6. Durch Verschwenken der Werkzeugspindel 2 um die Verschwenkachse VA kann eines der Kugelbahn-Fräswerkzeuge 4, 5 für eine Bearbeitung des Werkstücks 6 ausgewählt werden, sowie für die Bearbeitung des Werkstücks 6 ein Fräser-Anstellwinkel α (das ist der Winkel zwischen der Werkzeugspindelachse WSA und einer Werkstückachse, hier entsprechend der horizontalen Positionier-Achse PAb, gesehen in einer vertikalen Ebene) eingestellt werden. Durch geeignete Positionierung des (aktiven) Kugelbahn-Fräswerkzeugs 4 in y und z, insbesondere mit einem Achsversatz gegenüber der "12 Uhr Position", kann ein effektiver Schrägungswinkel für eine Kugelbahn eingestellt werden.

Die Kugelbahn-Fräswerkzeuge 4, 5 unterscheiden sich durch den Durchmesser des jeweiligen Fräskopfs; mit dem kleineren Fräskopf wird die eigentliche Kugelbahn gefertigt, und mit dem größeren Fräskopf eine Fase am Rand der Kugelbahn. Die Verschwenkachse VA schneidet die Werkzeugspindelachse WSA hier zwischen den Kugelbahn-Fräswerkzeugen 4, 5.

Auf einem Drehhalter 10, der um eine hier horizontale Drehhalter-Achse DA in einem ortsfesten Drehhalter-Lager 10a drehbar ist, sind hier zwei Drehpositionier-Vorrichtungen 11a, 11b jeweils mit einem Werkstückhalter 12a, 12b, für ein Werkstück 13, 6 ausgebildet. Mittels der Drehpositionier-Vorrichtungen 11a, 11b ist eine Drehstellung des zugehörigen Werkstückhalters 12a, 12b bzw. des darauf gehaltenen Werkstück 13, 6 um eine jeweilige Positionier-Achse PAa, PAb einstellbar. Die Positionier-Achsen PAa, PAb verlaufen hier parallel zur Drehhalter-Achse DA, und somit ebenfalls horizontal. Die Drehpositionier-Vorrichtungen 11a-11d sind hier mit Torque-Motoren 15a, 15b ausgestattet, die eine elektromagnetische Arretierung einer Drehstellung des Werkstückhalters 12a-12b gestatten.

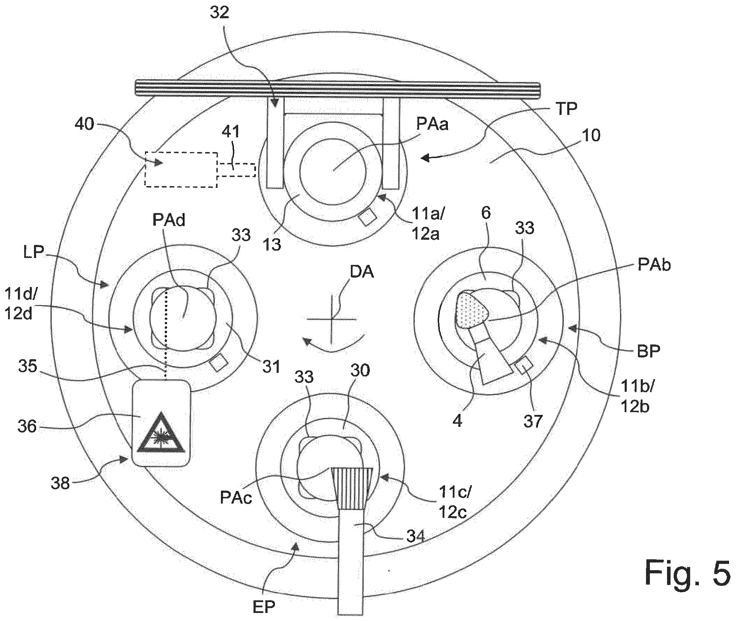

In der gezeigten Drehlage des Drehhalters 10 ist der Werkstückhalter 12a an einer Transferposition TP (in Fig. 1 links), und der Werkstückhalter 12b ist an einer Bearbeitungsposition BP (in Fig. 1 rechts). Am Werkstückhalter 12a an der Transferposition TP kann ein Werkstückwechsel mit einer Werkstück-Wechselvorrichtung stattfinden (nicht näher dargestellt, vgl. aber Fig. 5). Am Werkstückhalter 12b kann zeitgleich die Bearbeitung des dortigen Werkstücks 6 mit dem Kugelbahn-Fräswerkzeug 4 (oder auch dem Kugelbahn-Fräswerkzeug 5) erfolgen; hierbei kann die Drehstellung des Werkstücks 6 bzw. des Werkstückhalters 12b über die Drehpositionier-Vorrichtung 11b eingestellt, für einen jeweiligen Bearbeitungsschritt arretiert und im Laufe der Bearbeitung für weitere Bearbeitungsschritte verändert werden, etwa um zu einer nächsten zu fertigenden Kugelbahn am Werkstück 6 zu wechseln. Durch Drehen des Drehhalters 10 um die Drehhalter-Achse DA können die Werkstückhalter 12a, 12b zwischen der Transferposition TP und der Bearbeitungsposition BP getauscht werden.

In der gezeigten Ausführungsform ist eine Späneschutzwand 14 zwischen den Werkstückhaltern 12a, 12b vorgesehen. Die Späneschutzwand 14 ist bevorzugt aus Metall gefertigt, etwa als eine Stahlplatte (für eine bessere Übersichtlichkeit ist die Späneschutzwand 14 in den Figuren halbtransparent dargestellt).

Die Kugelbahn-Fräsmaschine 1 ist bezüglich aller Maschinenachsen (insbesondere DA, PAa-PAb, VA, x, y, z) automatisiert und motorisch ansteuerbar.

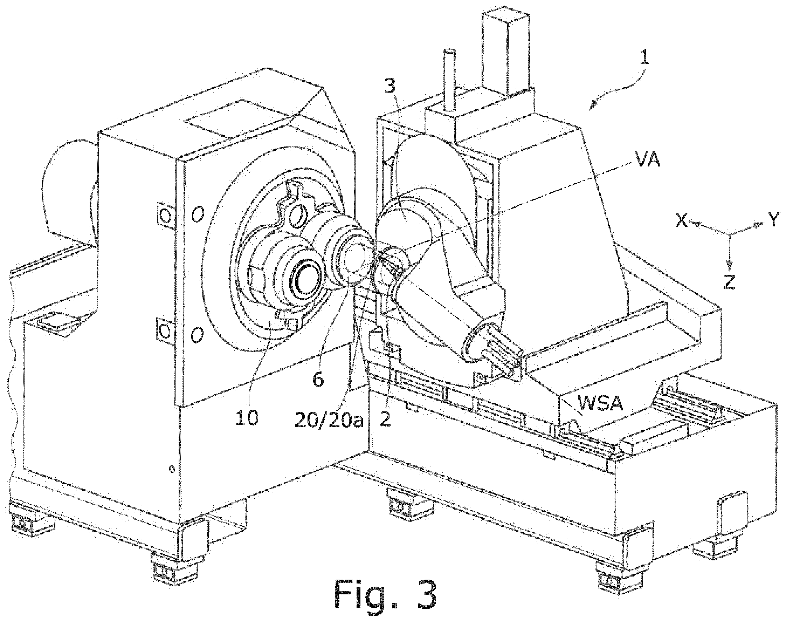

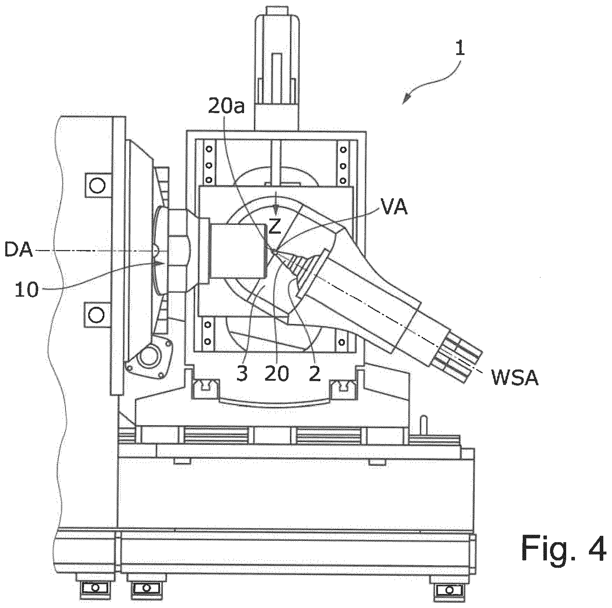

Die **Fig. 3** und **Fig. 4** zeigen eine zweite Ausführungsform einer erfindungsgemäßen Kugelbahn-Fräsmaschine 1 zum Fertigen von Kugelbahnen in Werkstücken für homokinetische Gelenke, hier im Rahmen einer Hartbearbeitung. Die zweite Ausführungsform entspricht im Wesentlichen der ersten Ausführungsform; es werden nur die wesentlichen Unterschiede zur ersten Ausführungsform erläutert.

Bei dieser Bauform ist an der Werkzeugspindel 2 lediglich ein Kugelbahn-Fräswerkzeug 20 angeordnet, welches um die Werkzeugspindelachse WSA drehbar ist. Die Werkzeugspindel-Halterung 3, auf der die Werkzeugspindel 2 angeordnet ist, ist um die Verschwenkachse VA verschwenkbar, wobei die Verschwenkachse VA die Werkzeugspindelachse WSA im Zentrum des Bearbeitungswerkzeugs (Fräskopfs) 20a des Kugelbahn-Fräswerkzeugs 20 schneidet.

Die **Fig. 5** zeigt eine Aufsicht auf einen Drehhalter 10 einer Kugelbahn-Fräsmaschine für die Erfindung gemäß einer dritten Ausführungsform.

Bei diesem Drehhalter 10 sind insgesamt vier Drehpositionier-Vorrichtungen 11a-11d jeweils mit Werkstückhaltern 12a-12d für Werkstücke 13, 6, 30, 31 vorgesehen. Die Werkstückhalter 12a-12d können durch Drehen des Drehhalters 10 um die Drehhalter-Achse DA in Schritten von Vierteldrehungen zwischen einer Transferposition TP, einer Bearbeitungsposition BP für die Kugelbahn-Fräsbearbeitung, einer Entgratposition EP und einer Laserhärteposition LP zyklisch wechseln. Mit den Drehpositionier-Vorrichtungen 11a-11d können die Werkstückhalter 12a-12d bzw. die dort gehaltenen Werkstücke 13, 6, 30, 31 um die zugehörige Positionier-Achse PAa-PAd gedreht werden.

An der Transferposition TP kann mittels einer Werkstück-Wechselvorrichtung 32, hier einem Portalsystem mit einem in radialer Richtung des Werkstücks 13 klemmenden Greifer, jeweils ein fertig bearbeitetes Werkstück vom dortigen Werkstückhalter 12a entfernt werden und ein neues, unbearbeitetes Werkstück 13 auf dem Werkstückhalter 12a angeordnet werden.

An der Bearbeitungsposition BP können mit dem Kugelbahn-Fräswerkzeug 4 Kugelbahnen 33 am dortigen Werkstück 6 gefräst werden. In der gezeigten Variante werden hier an jedem Werkstück 6 insgesamt vier Kugelbahnen 33 gefräst (vgl. hierzu Werkstück 31 an LP). Während der Bearbeitung an der Bearbeitungsposition BP wird das dortige Werkstück 6 daher mit der Drehpositionier-Vorrichtung 11b schrittweise nacheinander (hier in 90°-Schritten) in hier vier verschiedene Drehstellungen bezüglich der Positionier-Achse PAb gebracht, um die vier Kugelbahnen 33 zu fertigen; hierbei ändert sich die Drehlage des Drehhalters 10 bezüglich der Drehhalter-Achse DA nicht. Falls zwei Kugelbahn-Fräswerkzeuge 4, 5 für jede Kugelbahn eingesetzt werden (vgl. Fig. 1, Fig. 2), die auf einer gemeinsamen Werkzeugspindel sitzen, wird typischerweise jede Drehstellung der Drehpositionier-Vorrichtung 11b zweimal angefahren (entsprechend hier insgesamt acht Drehstellungen, nacheinander angefahren in 90°-Schritten), nämlich einmal mit jedem Kugelbahn-Fräswerkzeug 4, 5, so dass während der Bearbeitung des Werkstücks 6 an der Bearbeitungsposition BP die Werkzeugspindel-Halterung nur einmal um 180° geschwenkt werden muss. Eine jeweils angefahrene Drehstellung des Werkstückhalters bezüglich der Positionier-Achse PAb wird mittels einer Klemm- oder Riegelvorrichtung 37 für die Dauer der Kugelbahn-Fräsbearbeitung in dieser Drehstellung arretiert.

An einer Entgratposition EP ist eine Bürstentgrat-Vorrichtung 34 angeordnet, mit der Grate vom dortigen Werkstück 30 abgetragen werden können, insbesondere von den Rändern der zuvor an der Bearbeitungsposition BP gefertigten Kugelbahnen 33. Typischerweise ist während des Bürstens auch eine (in der Regel schrittweise) Drehung des Werkstücks 30 um die Positionier-Achse PAc vorgesehen, um alle relevanten Regionen des Werkstücks 30 mit der Bürstentgrat-Vorrichtung 34 optimal zu erreichen.

An einer Laserhärteposition LP kann mittels einer Laserhärtungs-Vorrichtung 38, hier mit einem Laserstrahl 35 aus einem Laser 36, eine Laserhärtung des dortigen Werkstücks 31 erfolgen, wobei typischerweise zumindest die Oberflächen der zuvor entgrateten Kugelbahnen 33 gehärtet werden. Man beachte, dass der Laser 36 auch entfernt von der Laserhärteposition LP angeordnet sein kann, und der Laserstrahl 35 mit einem Lichtwellenleiter (nicht dargestellt) zur Laserhärteposition LP geleitet werden kann. Um verschiedene Regionen des Werkstücks 31 mit dem Laserstrahl 35 gut zu erreichen, kann ein motorisch gesteuerter Umlenkspiegel ("Scanner") für den Laserstrahl 35 vorgesehen sein (nicht näher dargestellt); zusätzlich ist hier auch während der Laserhärtung eine schrittweise Drehung des Werkstücks 31 um die Positionier-Achse PAd vorgesehen, um alle zu härtenden Regionen des Werkstücks 31 gut zu erreichen.

Die Prozesse an den vier Positionen (Stationen) TP, BP, EP und LP können zeitgleich stattfinden. Der längste Prozess (meist der Kugelbahn-Fräsprozess an der Bearbeitungsposition BP) bestimmt den Takt der Werkstückbearbeitung, also die Dauer zwischen den Vierteldrehungen des Drehhalters 10 um die Drehhalter-Achse DA, mit denen ein Werkstück 13, 6, 30, 31 zur jeweils nächsten Position TP, BP, EP, LP verbracht wird. Insbesondere können der Werkstückwechsel an der Transferposition TP, das Entgraten an der Entgratposition EP und die Laserhärtung an der Laserhärteposition LP hauptzeitparallel zur Kugelbahn-Fräsbearbeitung an der Bearbeitungsposition BP stattfinden. Dadurch kann das Kugelbahn-Fräswerkzeug 4 (ggf. auch mehrere Kugelbahn-Fräswerkzeuge) sehr gut ausgelastet werden.

In einer abgewandelten Bauform des in Fig. 5 dargestellten Drehhalters 10 ist an der Transferposition TP auch eine Drehbearbeitungsfunktion eingerichtet, um ein gerade auf den Werkstückhalter 12a übernommenes, unbearbeitetes Werkstück 13 vor dem Beginn des Kugelbahn-Fräsprozesses vorbereitend noch abzudrehen.

An der Transferposition TP ist zu diesem Zweck zusätzlich zur Werkstück-Wechselvorrichtung 32 eine Drehbearbeitungs-Vorrichtung 40 (gestrichelt dargestellt) vorgesehen, hier umfassend ein radial und axial zustellbares Drehwerkzeug 41. Die Drehpositionier-Vorrichtungen 12a-12d sind mit Werkstückspindeln ausgeführt. Für die Drehbearbeitung wird das Werkstück 13 an der Transferposition TP mit der Werkstückspindel bzw. Drehpositionier-Vorrichtung 12a in schnelle Rotation um die Positionier-Achse PAa versetzt, und das Drehwerkzeug 41 wird an das Werkstück 13 zugestellt und Material vom Werkstück 13 abgedreht.

Dadurch, dass die Drehbearbeitungsfunktion hier an der Transferposition TP integriert ist, kann eine separate Drehbearbeitungsposition (bzw. Drehbearbeitungsstation) und eine entsprechende Drehpositionier-Vorrichtung auf dem Drehhalter 10 entfallen. Allerdings sollte für diese Bauform der vorgesehene Drehbearbeitungsprozess hinreichend schnell sein, sodass die gesamte Zeit für einen Werkstückwechsel und die Drehbearbeitung eines Werkstücks 13 an der Transferposition TP nicht länger ist als die Zeit für die Kugelbahn-Fräsbearbeitung eines Werkstücks an der Bearbeitungsposition BP. Falls der Drehbearbeitungsprozess nicht hinreichend schnell sein sollte, sollte besser eine separate Drehbearbeitungsposition, und entsprechend auch eine weitere Drehpositionier-Vorrichtung am Drehhalter 10, vorgesehen sein (wie für das Bürstentgraten an der Entgratposition EP und das Laserhärten an der Laserhärteposition LP eingerichtet).

### Bezugszeichenliste

- 1: Kugelbahn-Fräsmaschine
- 2: Werkzeugspindel
- 3: Werkzeugspindel-Halterung
- 4: erstes Kugelbahn-Fräswerkzeug
- 5: zweites Kugelbahn-Fräswerkzeug
- 6: Werkstück auf Bearbeitungsposition
- 7: Kreuzschlitten-System
- 10: Drehhalter
- 10a: ortsfestes Drehhalter-Lager
- 11a-11d: Drehpositionier-Vorrichtung
- 12a-12d: Werkstückhalter
- 13: Werkstück auf Transferposition
- 14: Späneschutzwand
- 15a-15b: Torque-Motor
- 20: Kugelbahn-Fräswerkzeug
- 20a: Bearbeitungswerkzeug/Fräskopf
- 30: Werkstück auf Entgratposition
- 31: Werkstück auf Laserhärteposition
- 32: Werkstück-Wechselvorrichtung
- 33: Kugelbahn
- 34: Bürstentgrat-Vorrichtung
- 35: Laserstrahl
- 36: Laser
- 37: Klemm- oder Riegelvorrichtung
- 38: Laserhärtungs-Vorrichtung
- 40: Drehbearbeitungs-Vorrichtung
- 41: Drehwerkzeug
- α: Fräser-Anstellwinkel
- BP: Bearbeitungsposition
- DA: Drehhalter-Achse
- EP: Entgratposition
- LP: Laserhärteposition
- PAa-PAd: Positionier-Achse (Drehpositionier-Vorrichtung)
- TP: Transferposition
- VA: Verschwenkachse
- WSA: Werkzeugspindelachse

## Patentansprüche

1. Kugelbahn-Fräsmaschine (1) zum Fertigen von Kugelbahnen (33) in Werkstücken (6, 13, 30, 31) für homokinetische Gelenke, umfassend
- eine um eine Werkzeugspindelachse (WSA) drehbare Werkzeugspindel (2), und
- ein Kugelbahn-Fräswerkzeug (4, 5; 20), das auf der Werkzeugspindel (2) gehalten ist,
**dadurch gekennzeichnet,**
**dass** die Kugelbahn-Fräsmaschine (1) einen Drehhalter (10) aufweist, auf welchem wenigstens zwei Drehpositionier-Vorrichtungen (11a-11d) angeordnet sind,
wobei jede Drehpositionier-Vorrichtung (11a-11d) einen Werkstückhalter (12a-12d) aufweist,
**dass** der Drehhalter (10) verschwenkbar um eine Drehhalter-Achse (DA) ausgebildet ist, so dass jeder der Werkstückhalter (12a-12d) zumindest zwischen einer Bearbeitungsposition (BP) und einer Transferposition (TP) verschwenkbar ist, wobei ein auf einem Werkstückhalter (12a-12d) angeordnetes Werkstück (6, 13, 30, 31) mittels des Kugelbahn-Fräswerkzeugs (4, 5; 20) bearbeitbar ist, wenn der Werkstückhalter (12a-12d) in der Bearbeitungsposition (BP) ist,
und **dass** mit einer jeweiligen Drehpositionier-Vorrichtung (11a-11d) eine Drehstellung des Werkstückhalters (12a-12d) um eine Positionier-Achse (PAa-PAd) gegenüber dem Drehhalter (10) veränderlich einstellbar ist, wobei die Drehstellung des Werkstückhalters (12a-12d) gegenüber dem Drehhalter (10) an der Bearbeitungsposition (BP) für eine Bearbeitung mit dem Kugelbahn-Fräswerkzeug (4, 5; 20) arretierbar ist.

2. Kugelbahn-Fräsmaschine (1) nach Anspruch 1, **dadurch gekennzeichnet, dass** die Werkzeugspindel (2) in einer Werkzeugspindel-Halterung (3) gelagert ist, die um eine Verschwenkachse (VA) drehbar ist, die nicht-parallel zur Werkzeugspindelachse (WSA) verläuft,
insbesondere wobei die Verschwenkachse (VA) senkrecht zur Werkzeugspindelachse (WSA) verläuft.

3. Kugelbahn-Fräsmaschine (1) nach Anspruch 2, **dadurch gekennzeichnet, dass** auf der Werkzeugspindel (2) zwei Kugelbahn-Fräswerkzeuge (4, 5; 20) an axial einander gegenüberliegenden Seiten der Werkzeugspindel (2) gehalten sind, so dass beide Kugelbahn-Fräswerkzeuge (4, 5; 20) gleichzeitig mittels der Werkzeugspindel (2) um die Werkzeugspindelachse (WSA) drehbar sind, und dass ein Werkstück (6, 13, 30, 31) auf einem Werkstückhalter (12a-12d) in Bearbeitungsposition (BP) durch Verschwenken der Werkzeugspindel-Halterung (3) um die Verschwenkachse (VA) alternativ mit den beiden Kugelbahn-Fräswerkzeugen (4, 5; 20) bearbeitbar ist.

4. Kugelbahn-Fräsmaschine (1) nach Anspruch 2, **dadurch gekennzeichnet, dass** das die Werkzeugspindel (2), die Werkzeugspindel-Halterung (3) und das Kugelbahn-Fräswerkzeug (4, 5; 20) so ausgebildet sind, dass die Verschwenkachse (VA) und die Werkzeugspindelachse (WSA) ein Zentrum eines Bearbeitungskopfs (20a) des Kugelbahn-Fräswerkzeugs (4, 5; 20) schneiden.

5. Kugelbahn-Fräsmaschine (1) nach einem der Ansprüche 2 bis 4, **dadurch gekennzeichnet, dass** die Verschwenkachse (VA) horizontal verläuft, insbesondere wobei die Verschwenkachse (VA) senkrecht zur Drehhalter-Achse (DA) verläuft.

6. Kugelbahn-Fräsmaschine (1) nach einem der vorhergehenden Ansprüche, **dadurch gekennzeichnet, dass** an jeder Drehpositionier-Vorrichtung (11a-11d) eine Klemm- oder Riegelvorrichtung (37) vorgesehen ist, mit der eine Drehstellung des Werkstückhalters (12a-12d) der Drehpositionier-Vorrichtung (11a-11d) gegenüber dem Drehhalter (10) mechanisch arretierbar ist.

7. Kugelbahn-Fräsmaschine (1) nach einem der vorhergehenden Ansprüche, **dadurch gekennzeichnet, dass** an jeder Drehpositionier-Vorrichtung (11a-11d) ein Torque-Motor (15a-15b) ausgebildet ist, mit dem eine Drehstellung des Werkstückhalters (12a-12d) der Drehpositionier-Vorrichtung (11a-11d) gegenüber dem Drehhalter (10) einstellbar ist, und mit dem die Drehstellung des Werkstückhalters (12a-12d) gegenüber dem Drehhalter (10) elektromagnetisch arretierbar ist.

8. Kugelbahn-Fräsmaschine (1) nach einem der vorhergehenden Ansprüche, **dadurch gekennzeichnet, dass** die Kugelbahn-Fräsmaschine (1) weiterhin eine Werkstück-Wechselvorrichtung (32) umfasst, wobei an einem Werkstückhalter (12a-12d) ein Werkstück (6, 13, 30, 31) mittels der Werkstück-Wechselvorrichtung (32) ausgetauscht werden kann, wenn der Werkstückhalter (12a-12d) in der Transferposition (TP) ist.

9. Kugelbahn-Fräsmaschine (1) nach einem der vorhergehenden Ansprüche, **dadurch gekennzeichnet, dass** die Kugelbahn-Fräsmaschine (1) weiterhin eine Bürstentgrat-Vorrichtung (34) umfasst, wobei ein Werkstück (6, 13, 30, 31) auf einem Werkstückhalter (12a-12d) mittels der Bürstentgrat-Vorrichtung (34) gebürstet werden kann, wenn der Werkstückhalter (12a-12d) mittels des Drehhalters (10) in die Transferposition (TP) oder eine Entgratposition (EP) verschwenkt ist.

10. Kugelbahn-Fräsmaschine (1) nach einem der vorhergehenden Ansprüche, **dadurch gekennzeichnet, dass** die Kugelbahn-Fräsmaschine (1) weiterhin eine Laserhärtungs-Vorrichtung (38) umfasst, wobei ein Werkstück (6, 13, 30, 31) auf einem Werkstückhalter (12a-12d) mittels der Laserhärtungs-Vorrichtung (38) gehärtet werden kann, wenn der Werkstückhalter (12a-12d) mittels des Drehhalters (10) in die Transferposition (TP) oder eine Laserhärteposition (LP) verschwenkt ist.

11. Kugelbahn-Fräsmaschine (1) nach einem der vorhergehenden Ansprüche, **dadurch gekennzeichnet, dass** die Drehpositionier-Vorrichtungen (11a-11d) jeweils mit einer Werkstückspindel ausgebildet sind, und dass die Kugelbahn-Fräsmaschine (1) weiterhin eine Drehbearbeitungs-Vorrichtung (40) umfasst, wobei ein Werkstück (6, 13, 30, 31) auf einem Werkstückhalter (12a-12d) mittels der Drehbearbeitungs-Vorrichtung (40) drehbearbeitet werden kann, während das Werkstück (6, 13, 30, 31) mit der Werkstückspindel gedreht wird, wenn der Werkstückhalter (12a-12d) mittels des Drehhalters (10) in die Transferposition (TP) oder eine Drehbearbeitungsposition verschwenkt ist.

12. Kugelbahn-Fräsmaschine (1) nach einem der vorhergehenden Ansprüche, **dadurch gekennzeichnet, dass** die Drehhalter-Achse (DA) horizontal verläuft.

13. Kugelbahn-Fräsmaschine (1) nach einem der vorhergehenden Ansprüche, **dadurch gekennzeichnet, dass** die Positionier-Achsen (PAa-PAd), um die die Werkstückhalter (12a-12d) mit den Drehpositionier-Vorrichtungen (11a-11d) verdrehbar sind, parallel zur Drehhalter-Achse (DA) verlaufen.

14. Kugelbahn-Fräsmaschine (1) nach einem der vorhergehenden Ansprüche, **dadurch gekennzeichnet, dass** die Werkzeugspindel (2) über ein Kreuzschlitten-System (7) gelagert ist, mit dem die Werkzeugspindel (2) relativ zum Drehalter (10) in drei orthogonale Raumrichtungen (x, y, z) verfahrbar ist,
insbesondere wobei der Drehhalter (10) in einem ortsfesten Drehhalter-Lager (10a) drehbar um die Drehhalter-Achse (DA) gelagert ist.

15. Verwendung einer Kugelbahn-Fräsmaschine (1) nach einem der vorhergehenden Ansprüche, wobei an einem Werkstück (6, 13, 30, 31) auf einem Werkstückhalter (12a-12d) in Bearbeitungsposition (BP) bei am Drehhalter (10) arretiertem Werkstückhalter (12a-12d) eine Kugelbahn (33) für ein homokinetisches Gelenk gefräst wird, und zeitgleich an einem Werkstückhalter (11a-11d) in Transferposition (TP) ein Werkstückwechsel und/oder eine andere Werkstückbearbeitung an einem dortigen Werkstück (6, 13, 30, 31) stattfindet.

## Claims

1. Ball track milling machine (1) for producing ball tracks (33) in workpieces (6, 13, 30, 31) for homokinetic joints, comprising
- a tool spindle (2) which can be rotated about a tool spindle axis (WSA), and
- a ball track milling tool (4, 5; 20) which is held on the tool spindle (2),
**characterized**
**in that** the ball track milling machine (1) comprises a rotary holder (10) on which at least two rotary positioning devices (11a-11d) are arranged,
wherein each rotary positioning device (11a-11d) comprises a workpiece holder (12a-12d),
**in that** the rotary holder (10) is designed such that it can be pivoted about a rotary holder axis (DA), so that each of the workpiece holders (12a-12d) can be pivoted at least between a machining position (BP) and a transfer position (TP), wherein a workpiece (6, 13, 30, 31) arranged on a workpiece holder (12a-12d) can be machined by means of the ball track milling tool (4, 5; 20) when the workpiece holder (12a-12d) is in the machining position (BP),
and **in that**, by means of a respective rotary positioning device (11a-11d), a rotary position of the workpiece holder (12a-12d) about a positioning axis (PAa-PAd) can be variably adjusted relative to the rotary holder (10), wherein the rotary position of the workpiece holder (12a-12d) relative to the rotary holder (10) can be locked at the machining position (BP) for machining with the ball track milling tool (4, 5; 20).

2. Ball track milling machine (1) according to claim 1, **characterized in that** the tool spindle (2) is mounted in a tool spindle holder (3) which is rotatable about a pivot axis (VA) which extends non-parallel to the tool spindle axis (WSA),
in particular wherein the pivot axis (VA) extends perpendicularly to the tool spindle axis (WSA).

3. Ball track milling machine (1) according to claim 2, **characterized in that** two ball track milling tools (4, 5; 20) are held on the tool spindle (2) on axially opposite sides of the tool spindle (2) so that both ball track milling tools (4, 5; 20) are simultaneously rotatable about the tool spindle axis (WSA) by means of the tool spindle (2), and **in that** a workpiece (6, 13, 30, 31) on a workpiece holder (12a-12d) in the machining position (BP) can be machined alternatively with the two ball track milling tools (4, 5; 20) by pivoting the tool spindle holder (3) about the pivot axis (VA).

4. Ball track milling machine (1) according to claim 2, **characterized in that** the tool spindle (2), the tool spindle holder (3) and the ball track milling tool (4, 5; 20) are designed in such a way that the pivot axis (VA) and the tool spindle axis (WSA) intersect a center of a machining head (20a) of the ball track milling tool (4, 5; 20).

5. Ball track milling machine (1) according to any one of claims 2 to 4, **characterized in that** the pivot axis (VA) extends in a horizontal direction,
in particular wherein the pivot axis (VA) extends perpendicularly to the rotary holder axis (DA).

6. Ball track milling machine (1) according to any one of the preceding claims, **characterized in that** on each rotary positioning device (11a-11d) a clamping or locking device (37) is provided with which a rotary position of the workpiece holder (12a-12d) of the rotary positioning device (11a-11d) can be mechanically locked with respect to the rotary holder (10).

7. Ball track milling machine (1) according to any one of the preceding claims, **characterized in that** a torque motor (15a-15b) is formed on each rotary positioning device (11a-11d), with which a rotary position of the workpiece holder (12a-12d) of the rotary positioning device (11a-11d) relative to the rotary holder (10) can be adjusted and with which the rotary position of the workpiece holder (12a-12d) relative to the rotary holder (10) can be locked electromagnetically.

8. Ball track milling machine (1) according to any one of the preceding claims, **characterized in that** the ball track milling machine (1) further comprises a workpiece changing device (32), wherein a workpiece (6, 13, 30, 31) on a workpiece holder (12a-12d) can be exchanged by means of the workpiece changing device (32) when the workpiece holder (12a-12d) is in the transfer position (TP).

9. Ball track milling machine (1) according to any one of the preceding claims, **characterized in that** the ball track milling machine (1) further comprises a brush deburring device (34), wherein a workpiece (6, 13, 30, 31) on a workpiece holder (12a-12d) can be brushed by means of the brush deburring device (34) when the workpiece holder (12a-12d) is pivoted to the transfer position (TP) or a deburring position (EP) by means of the rotary holder (10).

10. Ball track milling machine (1) according to any one of the preceding claims, **characterized in that** the ball track milling machine (1) further comprises a laser hardening device (38), wherein a workpiece (6, 13, 30, 31) on a workpiece holder (12a-12d) can be hardened by means of the laser hardening device (38) when the workpiece holder (12a-12d) is pivoted to the transfer position (TP) or to a laser hardening position (LP) by means of the rotary holder (10).

11. Ball track milling machine (1) according to any one of the preceding claims, **characterized in that** the rotary positioning devices (11a-11d) are each formed with a workpiece spindle, and **in that** the ball track milling machine (1) further comprises a turning machining device (40), wherein a workpiece (6, 13, 30, 31) on a workpiece holder (12a-12d) can undergo a turning machining by means of the turning machining device (40) while the workpiece (6, 13, 30, 31) is rotated with the workpiece spindle when the workpiece holder (12a-12d) is pivoted to the transfer position (TP) or to a turning machining position by means of the rotary holder (10).

12. Ball track milling machine (1) according to any one of the preceding claims, **characterized in that** the rotary holder axis (DA) extends in a horizontal direction.

13. Ball track milling machine (1) according to any one of the preceding claims, **characterized in that** the positioning axes (PAa-PAd) about which the workpiece holders (12a-12d) are rotatable with the rotary positioning devices (11a-11d) extend parallel to the rotary holder axis (DA).

14. Ball track milling machine (1) according to any one of the preceding claims, **characterized in that** the tool spindle (2) is mounted via a cross-slide system (7), by means of which the tool spindle (2) can be moved relative to the rotary holder (10) in three orthogonal spatial directions (x, y, z),
in particular wherein the rotary holder (10) is mounted in a stationary rotary holder bearing (10a) so as to be rotatable about the axis (DA) of the rotary holder.

15. The use of a ball track milling machine (1) according to any one of the preceding claims, wherein a ball track (33) for a homokinetic joint is milled on a workpiece (6, 13, 30, 31) on a workpiece holder (12a-12d) in the machining position (BP) with the workpiece holder (12a-12d) being locked on the rotary holder (10), and at the same time on a workpiece holder (11a-11d) in the transfer position (TP) a workpiece change and/or another workpiece machining operation on a workpiece (6, 13, 30, 31) located there takes place.

## Revendications

1. Fraiseuse (1) de chemin de roulement pour la fabrication de chemins de roulement (33) dans des pièces à usiner (6, 13, 30, 31) destinées à des joints homocinétiques, comprenant
- une broche porte-outil (2) pouvant tourner autour d'un axe de broche porte-outil (WSA), et
- un outil de fraisage (4, 5 ; 20) de chemin de roulement qui est maintenu sur la broche porte-outil (2),
**caractérisée en ce que**
la fraiseuse (1) de chemin de roulement présente un support rotatif (10) sur lequel sont agencés au moins deux dispositifs de positionnement rotatif (11a-11d),
chaque dispositif de positionnement rotatif (11a-11d) présentant un porte-pièce à usiner (12a-12d),
le support rotatif (10) est conçu de manière à pouvoir pivoter autour d'un axe de support rotatif (DA), de sorte que chacun des porte-pièce à usiner (12a-12d) peut pivoter au moins entre une position d'usinage (BP) et une position de transfert (TP), une pièce à usiner (6, 13, 30, 31) agencée sur un porte-pièce à usiner (12a-12d) pouvant être usinée au moyen de l'outil de fraisage t (4, 5 ; 20) de chemin de roulement lorsque le porte-pièce à usiner (12a-12d) se trouve dans la position d'usinage (BP),
et **en ce que** chaque dispositif de positionnement rotatif (11a-11d), permet d'ajuster de manière variable une position de rotation du porte-pièce à usiner (12a-12d) autour d'un axe de positionnement (PAa-PAd) par rapport au support rotatif (10), la position de rotation du porte-pièce à usiner (12a-12d) pouvant être bloquée dans la position d'usinage (BP) contre le support rotatif pour un usinage au moyen de l'outil de fraisage (4, 5 ; 20) de chemin de roulement.

2. Fraiseuse (1) de chemin de roulement selon la revendication 1, **caractérisée en ce que** la broche porte-outil (2) est montée dans un dispositif de maintien de broche porte-outil (3) qui peut tourner autour d'un axe de pivotement (VA) qui ne s'étend pas parallèlement à l'axe de broche porte-outil (WSA),
en particulier l'axe de pivotement (VA) étant perpendiculaire à l'axe de broche porte-outil (WSA).

3. Fraiseuse (1) de chemin de roulement selon la revendication 2, **caractérisée en ce que** deux outils de fraisage (4, 5 ; 20) de chemin de roulement sont maintenus sur des côtés axialement opposés de la broche porte-outil (2), de sorte que les deux outils de fraisage (4, 5 ; 20) de chemin de roulement peuvent être tournés simultanément autour de l'axe de broche porte-outil (WSA) au moyen de la broche porte-outil (2), et **en ce qu'**une pièce à usiner (6, 13, 30, 31) sur un porte-pièce à usiner (12a-12d) dans la position d'usinage (BP) peut être usinée alternativement avec les deux outils de fraisage (4, 5 ; 20) de chemin de roulement en faisant pivoter le support de broche porte-outil (3) autour de l'axe de pivotement (VA).

4. Fraiseuse (1) de chemin de roulement selon la revendication 2, **caractérisée en ce que** la broche porte-outil (2), le support de broche porte-outil (3) et l'outil de fraisage (4, 5 ; 20) de chemin de roulement sont conçus de telle sorte que l'axe de pivotement (VA) et l'axe de broche porte-outil (WSA) coupent un centre d'une tête d'usinage (20a) de l'outil de fraisage (4, 5 ; 20) de chemins de roulement.

5. Fraiseuse (1) de chemin de roulement selon l'une quelconque des revendications 2 à 4, **caractérisée en ce que** l'axe de pivotement (VA) s'étend horizontalement, en particulier dans laquelle l'axe de pivotement (VA) s'étend perpendiculairement à l'axe de support rotatif (DA).

6. Fraiseuse (1) de chemin de roulement selon l'une quelconque des revendications précédentes, **caractérisée en ce qu'**un dispositif de serrage ou de verrouillage (37) est prévu sur chaque dispositif de positionnement rotatif (11a à 11d), à l'aide duquel une position de rotation du porte-pièce à usiner (12a à 12d) du dispositif de positionnement rotatif (11a à 11d) peut être bloquée mécaniquement par rapport au support rotatif (10).

7. Fraiseuse (1) de chemin de roulement selon l'une quelconque des revendications précédentes, **caractérisée en ce qu'**un moteur de couple (15a-15b) est formé sur chaque dispositif de positionnement rotatif (11a à 11d), à l'aide duquel une position de rotation du porte-pièce à usiner (12a-12d) du dispositif de positionnement rotatif (11a-11d) par rapport au support rotatif (10) peut être réglée et à l'aide duquel la position de rotation du porte-pièce à usiner (12a-12d) par rapport au support rotatif (10) peut être bloquée électromagnétiquement.

8. Fraiseuse (1) de chemin de roulement selon l'une quelconque des revendications précédentes, **caractérisée en ce que** la fraiseuse (1) de chemin de roulement comprend en outre un dispositif de changement de pièce à usiner (32), une pièce à usiner (6, 13, 30, 31) pouvant être remplacée sur un porte-pièce à usiner (12a-12d) au moyen du dispositif de changement de pièce à usiner (32) lorsque le porte-pièce à usiner (12a-12d) est dans la position de transfert (TP).

9. Fraiseuse (1) de chemin de roulement selon l'une quelconque des revendications précédentes, **caractérisée en ce que** la fraiseuse (1) de chemin de roulement comprend en outre un dispositif d'ébavurage à brosse (34), une pièce (6, 13, 30, 31) pouvant être brossée sur un support de porte-pièce (12a-12d) au moyen du dispositif d'ébavurage à brosse (34) lorsque le porte-pièce à usiner (12a-12d) est pivoté dans la position de transfert (TP) ou une position d'ébavurage (EP) au moyen du support rotatif (10).

10. Fraiseuse (1) de chemin de roulement selon l'une quelconque des revendications précédentes, **caractérisée en ce que** la fraiseuse (1) de chemin de roulement comprend en outre un dispositif de durcissement au laser (38), une pièce à usiner (6, 13, 30, 31)sur un porte-pièce à usiner (12a-12d) pouvant être durcie au moyen du dispositif de durcissement au laser (38) lorsque le porte-pièce à usiner (12a-12d) est pivoté vers la position de transfert (TP) ou une position de durcissement au laser (LP) au moyen du support rotatif (10).

11. Fraiseuse (1) de chemin de roulement selon l'une quelconque des revendications précédentes, **caractérisée en ce que** les dispositifs de positionnement rotatif (11a à 11d) sont chacun formés avec une broche de pièce à usiner, et **en ce que** la fraiseuse (1) de chemin de roulement comprend en outre un dispositif d'usinage rotatif (40), une pièce à usiner (6, 13, 30, 31) pouvant être usinée de manière rotative sur un porte-pièce à usiner (12a à 12d) au moyen du dispositif d'usinage rotatif (40), tandis que la pièce à usiner(6, 13, 30, 31) est mise en rotation avec la broche de pièce à usiner lorsque le support de pièce à usiner (12a à 12d) est pivoté dans la position de transfert (TP) ou dans une position d'usinage en rotation au moyen du support rotatif (10).

12. Fraiseuse (1) de chemin de roulement selon l'une quelconque des revendications précédentes, **caractérisée en ce que** l'axe de support rotatif (DA) s'étend horizontalement.

13. Fraiseuse (1) de chemin de roulement selon l'une quelconque des revendications précédentes, **caractérisée en ce que** les axes de positionnement (PAa-PAd) autour desquels les porte-pièce à usiner (12a-12d) peuvent être tournés à l'aide des dispositifs de positionnement rotatif (11a-11d) s'étendent parallèlement par rapport à l'axe de support rotatif (DA).

14. Fraiseuse (1) de chemin de roulement selon l'une quelconque des revendications précédentes, **caractérisée en ce que** la broche porte-outil (2) est montée sur un système à chariot croisé (7), avec lequel la broche porte-outil (2) peut être déplacée par rapport au support rotatif (10) dans trois directions spatiales orthogonales (x, y, z), en particulier dans lequel le support rotatif (10) est monté rotatif autour de l'axe de support rotatif (DA) dans un palier de support rotatif fixe (10a).

15. Utilisation d'une fraiseuse (1) de chemin de roulement selon l'une quelconque des revendications précédentes, un chemins de roulement (33) pour une articulation homocinétique étant fraisé sur une pièce à usiner (6, 13, 30, 31) sur un porte-pièce à usiner (12a-12d) dans la position d'usinage (BP) lorsque le porte-pièce à usiner (12a-12d) est bloqué sur le support rotatif (10), et un changement de pièce à usiner et/ou un autre traitement de pièce à usiner sur une pièce à usiner (6, 13, 30, 31) ayant lieu simultanément sur un porte-pièce à usiner (11a-11d) dans la position de transfert (TP).
